# EUROPÄISCHE PATENTSCHRIFT

(11) **EP 2 649 301 B1**
(45) Veröffentlichungstag und Bekanntmachung des Hinweises auf die Patenterteilung: **17.01.2018**
(21) Anmeldenummer: 11781451.7
(22) Anmeldetag: 09.11.2011
(51) Int. Cl.: F03B 3/10, F03B 3/18, F03B 11/02

(54) **PUMPTURBINENANLAGE**
PUMP-TURBINE SYSTEM
ENSEMBLE POMPE-TURBINE

(30) Priorität: 07.12.2010 DE 102010053704
(43) Veröffentlichungstag der Anmeldung: 16.10.2013
(73) Patentinhaber: Voith Patent GmbH, 89522 Heidenheim (DE)
(72) Erfinder: STUMMER, Manfred, 89520 Heidenheim (DE)
(74) Vertreter: Dr. Weitzel & Partner
(86) Internationale Anmeldenummer: PCT/EP2011/005614
(87) Internationale Veröffentlichungsnummer: WO 2012/076090

(56) Entgegenhaltungen:
- DE-C- 587 694
- DE-C- 605 292
- DE-C- 606 894
- FR-A1- 2 278 001
- GB-A- 1 239 413

## Beschreibung

Die Erfindung betrifft eine Pumpturbinenanlage, umfassend eine Turbine mit einem Turbinenlaufrad sowie einem Turbinenspiralgehäuse sowie eine Pumpe mit einem Pumpenlaufrad sowie einem Pumpenspiralgehäuse. Pumpe und Turbine stehen in Triebverbindung mit einer elektrischen Maschine oder sind in eine solche bringbar.

GB 1 239 413 A beschreibt eine Pumpturbine, umfassend eine Pumpe und eine Turbine, welche gegenläufig angeordnete Spiralgehäuse aufweisen. Die Saugseiten der Spiralgehäuse münden dabei in einer gemeinsamen Saugleitung.

DE 606 894 C beschreibt eine Pumpturbine mit den Merkmalen des Oberbegriffs des Anspruchs 1.

Dabei kommen als Turbinen Francis- oder Pelton-Turbinen in Betracht. Weiterhin kann sowohl die Pumpe als auch die Turbine ein- oder mehrstufig ausgeführt sein, sodass Kombinationen einer einstufigen Turbine mit einer mehrstufigen Pumpe denkbar sind, oder mehrstufige Turbinen mit einer ein- oder mehrstufiger Pumpe.

Pumpturbinenanlagen von Pumpspeicherkraftwerken weisen zwei Betriebsmodi auf, nämlich einen Turbinenbetrieb und einen Pumpbetrieb. Im letzteren pumpt die Pumpe Wasser aus einem Unterbecken in ein Oberbecken und wird dafür durch eine elektrische Maschine, welche in Triebverbindung mit der Pumpe steht, angetrieben. Die elektrische Maschine wird dabei aus einem öffentlichen Stromnetz gespeist, das heißt mit elektrischer Leistung versorgt.

Im Turbinenbetrieb hingegen treibt das Wasser, welches aus dem Oberbecken durch die Turbine in das Unterbecken strömt, die Turbine an, welche eine entsprechende Leistung auf die elektrische Maschine überträgt. Die elektrische Maschine wandelt die Antriebsleistung in elektrische Leistung um und speist diese ins Stromnetz. Somit arbeitet die elektrische Maschine einmal als Generator und einmal als Motor. Sie wird daher auch als Motor-Generator bezeichnet.

Im Gegensatz zu den oben genannten gattungsgemäßen Pumpturbinenanlagen sind auch reversible Pumpturbinenanlagen bekannt geworden, bei welchen die Turbine und Pumpe von einem gemeinsamen Laufrad gebildet wird, sodass im Turbinenbetrieb das gemeinsame Laufrad zur Erzeugung elektrischer Leistung mit Wasser aus dem Oberbecken beaufschlagt und im Pumpbetrieb durch die elektrische Maschine angetrieben wird.

Da derartige Pumpspeicherkraftwerke für den Ausgleich von Lastspitzen im Stromnetz herangezogen werden, muss die Pumpturbine möglichst schnell in die Lage versetzt werden, Turbinenleistung zu liefern, um das Stromnetz zu unterstützen beziehungsweise rasch Pumpleistung aufzunehmen, um für primäre Netzregelung eingesetzt zu werden. Es ist daher wünschenswert, dass die Pumpturbine eines Pumpspeicherkraftwerks aus dem Turbinenbetrieb möglichst schnell in den Pumpbetrieb versetzt werden kann, und umgekehrt. Dies ist bei den genannten reversiblen Pumpturbinen problematisch, da für den Betriebsübergang vom Turbinenbetrieb zum Pumpbetrieb oder umgekehrt eine Drehrichtungsumkehr der Welle, auf der das gemeinsame Laufrad sitzt, nötig ist. Diese Drehrichtungsumkehr bedingt Lastwechsel, welche sich sowohl negativ auf die Welle und damit das Laufrad als auch die damit in Triebverbindung stehenden weiteren Bauelemente, wie beispielsweise die Welle des Motor-Generator oder die an der Lagerung beteiligten Lager dieser Wellen auswirkt.

Reversible Pumpturbinen sind aufgrund des gemeinsamen Laufrads nur in der Lage entweder im Pump- oder Turbinenbetrieb betrieben zu werden. Dies erschwert jedoch die Leistungsregelung derartiger Pumpturbinenanlagen im Pumpbetrieb.

Es wurden zahlreiche Anstrengungen unternommen, um diese Lastwechsel bei Pumpturbinenanlagen, die daraus resultierenden Nachteile und die Leistungsregelung zu verbessern. Die Maßnahmen waren bis zu einem gewissen Grade erfolgreich. Eine weitere Verbesserung der Dauer der Betriebsübergänge sowie eine Vermeidung von Lastwechseln ist jedoch wünschenswert.

Der Erfindung liegt daher die Aufgabe zugrunde, eine Pumpturbinenanlage der eingangs beschriebenen Art derart zu gestalten, sodass die Lastwechsel der rotierenden Bauelemente verringert werden können. Gleichzeitig soll eine verbesserte Leistungsregelung der Pumpturbinenanlage im Pumpbetrieb ermöglicht werden.

Die Aufgabe wird durch die Merkmale von Anspruch 1 gelöst.

Demgemäß umfasst die erfindungsgemäße Pumpturbinenanlage eine Turbine mit einem Turbinenlaufrad sowie einem Turbinenspiralgehäuse, eine Pumpe mit einem Pumpenlaufrad sowie ein Pumpenspiralgehäuse. Die beiden Spiralgehäuse sind gegenläufig zueinander angeordnet. Das bedeutet, dass das Wasser relativ zu den beiden Spiralgehäusen gesehen entgegengesetzt strömt. Man könnte auch sagen, dass sich der Strömungsquerschnitt des Turbinenspiralgehäuses in Strömungsrichtung des Wassers in entgegengesetzter Drehrichtung zu dem des Pumpenspiralgehäuses verjüngt.

Weiterhin ist eine Welle vorgesehen, auf der das Turbinenlaufrad und das Pumpenlaufrad drehfest angeordnet sind, wobei eine elektrische Maschine in einer Triebverbindung mit der Welle steht oder in eine solche bringbar ist. Beispielsweise kann die elektrische Maschine, die als Motor-Generator ausgeführt sein kann, mittels eines Anfahrelements wie einer Kupplung von der Welle abkoppelbar sein.

Erfindungsgemäß münden die Druckleitungen beider Spiralgehäuse in einer gemeinsamen Druckleitung.

Gemäß einem weiteren Gedanken der Erfindung ist dem Turbinenspiralgehäuse ein Leitapparat zur Regulierung der Einströmung in das Turbinenlaufrad nachgeschaltet, wobei das Turbinenspiralgehäuse einen Traversenring aufweist und zwischen Traversenring und Leitapparat ein Ringschieber zum Absperren der Einströmung in das Turbinenlaufrad angeordnet ist. Dabei kann es sich beispielsweise um einen Axial- oder Zylinderschieber handeln.

Gemäß einer weiteren Gedanken der Erfindung weist das Pumpenspiralgehäuse ebenfalls einen Traversenring auf, wobei zwischen Traversenring und Pumpenlaufrad ebenfalls ein Ringschieber angeordnet ist, welcher, wie beim Turbinenlaufrad bereits dargelegt, ausgeführt sein kann. Dem Turbinenlaufrad wird vorteilhafterweise ein Turbinensaugrohr nachgeschaltet, und dem Pumpenlaufrad ein Pumpensaugrohr vorgeschaltet, wobei beide Saugrohre je ein separates Absperrorgan aufweisen und das Turbinensaugrohr sowie das Pumpensaugrohr in einer gemeinsamen Saugleitung münden.

Im Gegensatz zu den reversiblen Pumpturbinen umläuft die Welle der erfindungsgemäßen Pumpturbinenanlage sowohl im Turbinenbetrieb als auch im Pumpenbetrieb stets in derselben Drehrichtung. Hierdurch können Lastwechsel infolge einer Drehrichtungsumkehr der Welle vermieden werden, wodurch die angeschlossenen Bauelemente deutlich geschont werden und somit konstruktiv einfacher ausgeführt werden können.

Die erfindungsgemäße Pumpturbinenanlage ermöglicht überdies den Betrieb im hydraulischen Kurzschluss. Das bedeutet, dass beide hydraulische Maschinen, also sowohl die Pumpe als auch die Turbine, gleichzeitig betrieben werden können, wodurch eine noch bessere Leistungsregelung der Pumpturbinenanlage im Pumpbetrieb erreicht werden kann.

Die beschriebenen Ringschieber dienen dazu, die Pumpe oder Turbine in Kombination mit den Absperrorganen in den Saugleitungen absperren zu können, damit diese entleert werden können. Im reinen Turbinenbetrieb ist dann die Pumpe entleert, sodass das Pumpenlaufrad in Luft umläuft, wobei im reinen Pumpbetrieb die Turbine abgesperrt ist, sodass das Turbinenlaufrad in Luft umläuft. Im hydraulischen Kurzschluss werden sowohl das Turbinenlaufrad als auch das Pumpenlaufrad vom Wasser durchströmt.

Die Erfindung ist anhand der Zeichnung näher erläutert. Darin ist im Einzelnen folgendes dargestellt:
- Figur 1: zeigt zwei in Francis-Bauart ausgeführte hydraulische Maschinen, die eine als Turbine und die andere als Pumpe, in einem Axialschnitt.
- Figur 2: zeigt in schematischer Darstellung eine Pumpturbinenanlage gemäß einer ersten Ausführungsform mit einer in Vertikalrichtung verlaufenden Welle.
- Figur 3: zeigt in schematischer Darstellung eine weitere Ausführungsform der Pumpturbinenanlage mit einer in Horizontalrichtung angeordneten Welle.
- Figur 4: zeigt in schematischer Darstellung eine dritte Ausführungsform, bei der sich eine elektrische Maschine zwischen den beiden Spiralgehäusen befindet.

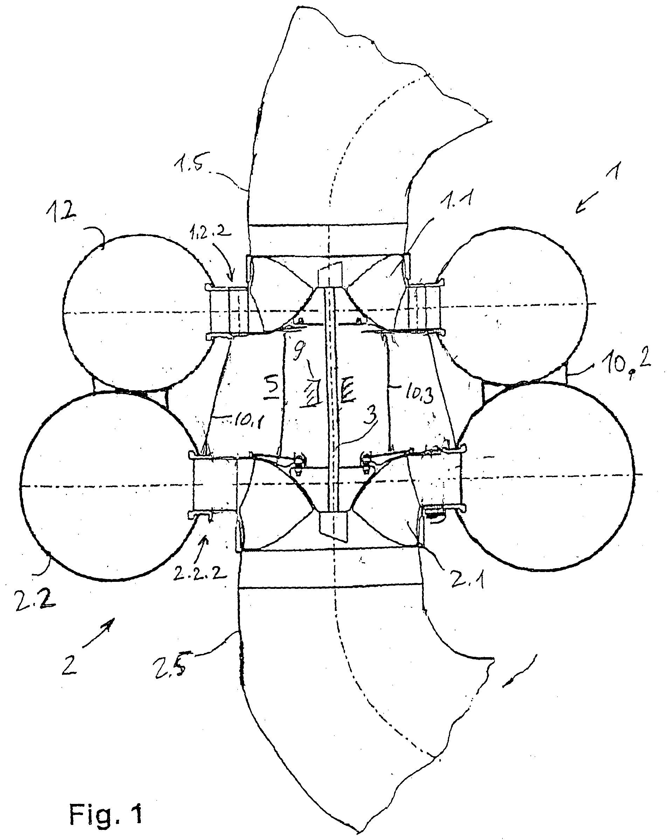

Die in Figur 1 gezeigte Pumpturbinenanlage ist wie folgt aufgebaut: Die Turbine 1 umfasst ein Turbinenlaufrad 1.1, umfassend eine Mehrzahl von Laufschaufeln. Das Turbinenlaufrad 1.1 ist drehfest mit einer Welle 3 ausgeführt, und dessen Drehachse 7 ist drehbar gelagert. Das Turbinenlaufrad 1.1 ist von einem Turbinenspiralgehäuse 1.2 umgeben. Außerdem ist dem Turbinenlaufrad 1.1 ein Kranz von Leitschaufeln vorgeschaltet.

Die Turbine 1 weist ein Turbinensaugrohr 1.5 auf. Dieses ist den Laufschaufeln nachgeschaltet und umfasst einen Eintrittsdiffusor mit einem sich hieran anschließenden Krümmer und einer sich wiederum hieran anschließenden Rohrleitung, der Strömungsquerschnitt sich in Strömungsrichtung des Wassers erweitern kann.

Vorliegend ist der Turbine 1 eine Pumpe 2 unmittelbar zugewandt. Letzteres bedeutet, dass beide hydraulische Maschinen axial benachbart angeordnet sind und sich zwischen ihnen kein Motor-Generator befindet. Die Pumpe 2 ist hier unterhalb der Turbine 1 angeordnet.

Die Pumpe 2 umfasst einen ähnlichen Aufbau wie die Turbine 1: Das Pumpenlaufrad 2.1 ist ebenfalls drehfest mit der Welle 3 ausgeführt und umfasst eine Mehrzahl von Laufschaufeln. Die Pumpe 2 umfasst ein separates, von dem Turbinenspiralgehäuse 1.2 hydraulisch getrenntes Pumpenspiralgehäuse 2.2, welches das Pumpenlaufrad 2.1 umgibt.

Auch die Pumpe 2 weist ein Pumpensaugrohr 2.5 auf, welches wie das der Turbine 1 ausgeführt sein kann.

Im vorliegenden Fall liegen die beiden Spiralgehäuse 1.2 und 2.2 direkt in einem gegenseitigen Abstand übereinander. Der von ihnen gebildete Zwischenraum 5 ist vorliegend frei von einer elektrischen Maschine. Der Zwischenraum 5 wird vorliegend von den einander zugewandten Spiralgehäusen 1.2 und 2.2 begrenzt. Beide Spiralgehäuse 1.2 und 2.2 können über ein Stützelement gegeneinander abgestützt sein.

Das Stützelement kann von unterschiedlicher Gestalt sein. Im vorliegenden Falle ist es als Kegelmantel 10.1 ausgeführt. Der Kegelmantel stützt sich einerseits gegen den Traversenring 1.2.2 der Turbine, und andererseits gegen den Traversenring 2.2.2 der Pumpe. Eine weitere Abstützung 10.2, ebenfalls in Ringform, befindet sich zwischen den Spiralgehäusen 1.2 und 2.2. Auch wären Abstützungen denkbar zwischen dem Spiralgehäuse der einen Maschine, und dem Traversenring der anderen Maschine.

Eine weitere Abstützung 10.3 in Gestalt eines Zylinders befindet sich zwischen dem Turbinendeckel und dem Pumpendeckel. Die Abstützung 10.3 hat den Vorteil, dass sie einen Kraftausgleich zwischen den beiden Maschinen herbeiführt. Auch eine Abstützung zwischen dem Traversenring der einen Maschine und dem Deckel der anderen Maschine kommt in Betracht.

Wie man sieht, ist die Welle 3 in einem Lager 9 gelagert. Das Lager 9 kann in eine der Abstützungen 10.1 beziehungsweise 10.3 integriert sein.

Die folgenden Bauteile können eine einzige Baueinheit bilden: das Turbinenspiralgehäuse 1.2, das Pumpenspiralgehäuse 2.2, die Stützelemente 10.1, 10.2, 10.3, gegebenenfalls noch die Traversenringe 1.2.2 und 2.2.2 sowie das Lager 9. Die genannten Stützelemente 10.1, 10.2, 10.3 können alle drei vorhanden sein, oder nur eines der Stützelemente, oder zwei der Stützelemente.

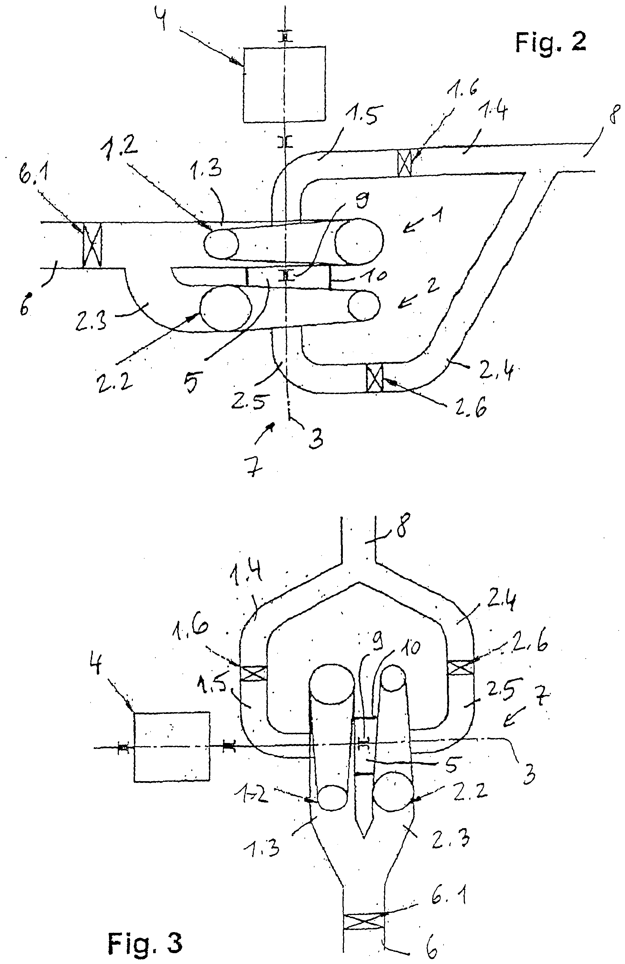

Figur 2 zeigt eine erste Ausführungsform der erfindungsgemäßen Pumpenturbinenanlage. Wie man sieht, schließt sich an das Turbinenspiralgehäuse 1.2 eine Druckleitung 1.3 sowie an das Pumpenspiralgehäuse 2.2 eine Druckleitung 2.3 an. Beide Druckleitungen 1.3, 2.3 münden in einer gemeinsamen Druckleitung 6, in welcher sich ein gemeinsames Absperrorgan 6.1 befindet.

Das gemeinsame Absperrorgan 6.1 in der Druckleitung 6 bleibt vorzugsweise stets offen und wird nur im Notschlussfall oder zu Wartungszwecken geschlossen. Dies bringt den Vorteil mit sich, dass die beiden Spiralgehäuse 1.1 und 2.2 stets mit demselben Druck, nämlich dem am Oberwasser anstehenden Oberwasserdruck beaufschlagt sind und somit keinen frequenten Lastwechseln ausgesetzt sind.

An beide Saugrohre 1.5 und 2.5 schließen sich jeweils entsprechende Saugleitungen 1.4 und 2.4 an. In beiden Saugleitungen 1.4 und 2.4 ist jeweils ein separates Absperrorgan 1.6 und 2.6 angeordnet. Beide Saugleitungen 1.4 und 2.4 münden in einer gemeinsamen Saugleitung 8.

In Triebverbindung mit der Welle 3 steht vorliegend eine elektrische Maschine 4, welches als Motor-Generator ausgeführt ist. Letztere ist oberhalb der Turbine 1 und somit außerhalb des Zwischenraums 5 axial benachbart zur Turbine langeordnet. Hierdurch ist es möglich im Zwischenraum 5, welcher von den beiden Spiralgehäusen 1.2 und 2.2 sowie von dem Stützelement 10 begrenzt wird ein Lager 9 einzubringen, welches beispielsweise als Führungslager oder kombiniertes Spur- und Führungslager zur Abstützung der Welle 3 dient. Dadurch wird die Laufruhe der Welle 3 nochmals verbessert.

Figur 3 zeigt eine weitere Ausführungsform der erfindungsgemäßen Pumpturbinenanlage in Anlehnung an Figur 2, deren Anordnung lediglich um 90 Grad nach links gedreht worden ist, sodass die Drehachse 3 in horizontaler Richtung verläuft und die elektrische Maschine 4 seitlich neben den beiden hydraulischen Maschinen 1 und 2 angeordnet ist. Dabei sind im Wesentlichen dieselben Bauelemente mit den gleichen Bezugszeichen, wie in Figur 2 bezeichnet, dargestellt.

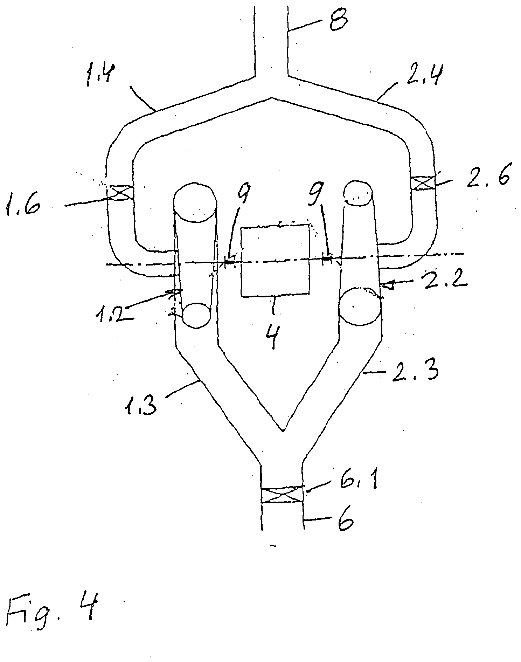

Figur 4 zeigt eine weitere Ausführungsform, bei welcher die elektrische Maschine 4 zwischen den beiden Spiralgehäusen 1.2 und 2.2 angeordnet ist, und zwar proaxial zu diesen. Die Anordnung der beiden Spiralgehäuse 1.2 und 2.2 sowie der elektrischen Maschine 4 kann eine streng symmetrische sein.

Bevorzugt könnten unabhängig von der Lage der Welle 3 beide Spiralgehäuse 1.2 und 2.2 komplett einbetoniert aber auch freistehend angeordnet sein. Der Zwischenraum 5 kann so groß ausgebildet sein, dass eine Revisionsöffnung zur Wartung beider hydraulischer Maschinen problemlos erreichbar ist.

Die Erfindung lässt sich unter anderem bei den folgenden Bauarten von Anlagen verwenden:
- Einstufige Turbine mit einstufiger Pumpe.
- Einstufige Turbine mit mehrstufiger Pumpe.
- Mehrstufige Turbine mit einstufiger Pumpe.
- Mehrstufige Turbine mit mehrstufiger Pumpe.

### Bezugszeichenliste

- 1: Turbine
- 1.1: Turbinenlaufrad
- 1.2: Turbinenspiralgehäuse
- 1.2.1: Leitschaufel
- 1.2.2: Traversenring
- 1.3: Druckleitung
- 1.4: Saugleitung
- 1.5: Turbinensaugrohr
- 1.6: Absperrorgan
- 2: Pumpe
- 2.1: Pumpenlaufrad
- 2.2: Pumpenspiralgehäuse
- 2.2.2: Traversenring
- 2.3: Druckleitung
- 2.4: Saugleitung
- 2.5: Pumpensaugrohr
- 2.6: Absperrorgan
- 3: Welle
- 4: elektrische Maschine
- 6: Druckleitung
- 6.1: Absperrorgan
- 7: Drehachse
- 8: Saugleitung
- 9: Lager
- 10.1: Stützelement
- 10.2: Stützelement
- 10.3: Stützelement

## Patentansprüche

1. Pumpturbinenanlage, umfassend
1.1 eine Turbine (1) mit einem Turbinenlaufrad (1.1) sowie einem Turbinenspiralgehäuse (1.2) und ein Turbinensaugrohr (1.5);
1.2 eine Pumpe (2) mit einem Pumpenlaufrad (2.1) sowie ein Pumpenspiralgehäuse (2.2) und ein Pumpensaugrohr (2.5);
1.3 die beiden Spiralgehäuse (1.2, 2.2) sind gegenläufig zueinander angeordnet;
1.4 eine Welle (3), auf der das Turbinenlaufrad (1.1) und das Pumpenlaufrad (2.1) drehfest angeordnet sind;
1.5 eine elektrische Maschine (4), die in einer Triebverbindung mit der Welle (3) steht oder in eine solche bringbar ist;
1.6 die Druckleitungen (1.3, 2.3) der beiden Spiralgehäuse (1.2, 2.2) münden in eine einzige gemeinsame Druckleitung (6);
1.7 beide Saugrohre (1.5, 2.5) sind jeweils an Saugleitungen (1.4, 2.4) angeschlossen, wobei beide Saugleitungen (1.4, 2.4) in einer gemeinsamen Saugleitung (8) münden; wobei
1.8 in den Saugleitungen (1.4, 2.4) ist jeweils ein separates Absperrorgan (1.6, 2.6) angeordnet; wobei
1.9 die beiden Spiralgehäuse (1.2, 2.2) miteinander einen Zwischenraum (5) begrenzen und mittels eines Stützelementes, wie einem zylindrischen Stützringe oder Stützkonus, direkt abgestützt sind; und
1.10 in der Druckleitung (6) ein gemeinsames Absperrorgan (6.1) angeordnet ist; **dadurch gekennzeichnet, dass**
1.11 im Zwischenraum (5) ein Lager (9), wie Führungslager oder kombiniertes Spur- und Führungslager zur Abstützung der Welle (3) angeordnet ist; und
1.12 das gemeinsame Absperrorgan (6.1) derart ausgeführt ist, dass die beiden Spiralgehäuse (1.1, 2.2) stets mit demselben Druck, nämlich dem am Oberwasser anstehenden Oberwasserdruck beaufschlagbar sind.

2. Pumpturbinenanlage gemäß Anspruch 1, **dadurch gekennzeichnet, dass** sich die elektrische Maschine (4) im Zwischenraum (5) zwischen den beiden Spiralgehäuse (1.2, 2.2) befindet.

3. Pumpturbinenanlage gemäß Anspruch 1, **dadurch gekennzeichnet, dass** sich die elektrische Maschine (4) außerhalb des Zwischenraums (5) zwischen den beiden Spiralgehäusen (1.2, 2.2) befindet.

4. Pumpturbinenanlage gemäß einem der Ansprüche 1 bis 3, **gekennzeichnet durch** die folgenden Merkmale:
4.1 die Spiralgehäuse (1.2, 2.2) sind in einem definierten axialen Abstand zueinander angeordnet;
4.2 die Spiralgehäuse (1.2, 2.2) bilden eine kompakte Baueinheit miteinander;
4.3 das Auslaufrohr des einen Spiralgehäuses mündet in das Einlaufrohr des anderen Spiralgehäuses.

## Claims

1. A pump turbine system, comprising
1.1 a turbine (1) having a turbine wheel (1.1) and a turbine spiral housing (1.2) and a turbine intake pipe (1.5);
1.2 a pump (2) having a pump wheel (2.1) and a pump spiral housing (2.2) and a pump intake pipe (2.5);
1.3 the two spiral housings (1.2, 2.2) are arranged in opposite directions to each other;
1.4 a shaft (3) on which the turbine wheel (1.1) and the pump wheel (2.1) are arranged in a rotationally fixed manner;
1.5 an electric machine (4) which is in a drive connection with the shaft (3) or can be brought into such a connection;
1.6 the pressure lines (1.3, 2.3) of the two spiral housing (1.2, 2.2) open into a single common pressure line (6);
1.7 both intake pipes (1.5, 2.5) are each connected to intake conduits (1.4, 2.4), wherein both intake conduits (1.4, 2.4) open into a common intake conduit (8); wherein
1.8 a separate shut-off device (1.6, 2.6) is arranged in each case in the intake conduits (1.4, 2.4);
1.9 the two spiral housings (1.2, 2.2) delimit an intermediate space (5) with each other and are supported directly by means of a support element such as a cylindrical support ring or support cone; and
1.10 a common shut-off device (6.1) is arranged in the pressure line (6); **characterized in that**
1.11 a bearing (9), such as guide bearing or combined track and guide bearing, is arranged in the intermediate space (5) for supporting the shaft (3); and
1.12 the common shut-off device (6.1) is designed such that the two spiral housings (1.1, 2.2) are always supplied with the same pressure, namely the headwater pressure applied to the headwater.

2. A pump turbine system according to claim 1, **characterized in that** the electric machine (4) is located in the intermediate space (5) between the two spiral housings (1.2, 2.2).

3. A pump turbine system according to claim 1, **characterized in that** the electric machine (4) is located outside the intermediate space (5) between the two spiral housings (1.2, 2.2).

4. A pump turbine system according to one of the claims 1 to 3, **characterized by** the following features:
4.1 the spiral housings (1.2, 2.2) are arranged at a defined axial distance from one another;
4.2 the spiral housings (1.2, 2.2) form a compact unit with each other;
4.3 the outlet pipe of the one spiral housing opens into the inlet pipe of the other spiral housing.

## Revendications

1. Installation de pompe-turbine comprenant :
1.1 une turbine (1) avec une roue de turbine (1.1) ainsi qu'une volute de turbine (1.2) et un tuyau d'aspiration de turbine (1.5) ;
1.2 une pompe (2) avec une roue de pompe (2.1) ainsi qu'une volute de pompe (2.2) et un tuyau d'aspiration de pompe (2.5) ;
1.3 les deux volutes (1.2, 2.2) étant disposées en sens opposé l'une par rapport à l'autre ;
1.4 un arbre (3) sur lequel la roue de turbine (1.1) et la roue de pompe (2.1) sont disposées de manière solidaire en rotation ;
1.5 une machine électrique (4) qui se trouve en liaison motrice avec l'arbre (3) ou peut être amenée dans une telle liaison ;
1.6 les conduites de refoulement (1.3, 2.3) des deux volutes (1.2, 2.2) débouchant dans une seule conduite de refoulement (6) commune ;
1.7 les deux tuyaux d'aspiration (1.5, 2.5) étant raccordés chacun à une conduite d'aspiration (1.4, 2.4), les deux conduites d'aspiration (1.4, 2.4) débouchant dans une conduite d'aspiration commune (8) ;
1.8 dans laquelle un organe d'arrêt (1.6, 2.6) séparé est disposé dans les conduites d'aspiration (1.4, 2.4) ;
1.9 dans laquelle les deux volutes (1.2, 2.2) délimitent ensemble un espace intermédiaire (5) et sont directement soutenues par l'intermédiaire d'un élément de soutien tel qu'un anneau de soutien cylindrique ou un cône de soutien ; et
1.10 un organe d'arrêt commun (6.1) est disposé dans la conduite de refoulement (6) ; **caractérisée en ce que**
1.11 un palier (9) tel qu'un palier de guidage ou un palier de butée et de guidage combiné est disposé dans l'espace intermédiaire (5) pour soutenir l'arbre (3) ; et
1.12 l'organe d'arrêt commun (6.1) est réalisé de telle manière que les deux volutes (1.1, 2.2) puissent toujours être soumises à la même pression, à savoir la pression d'eau d'amont régnant en amont.

2. Installation de pompe-turbine selon la revendication 1, **caractérisée en ce que** la machine électrique (4) se trouve dans l'espace intermédiaire (5) entre les deux volutes (1.2, 2.2).

3. Installation de pompe-turbine selon la revendication 1, **caractérisée en ce que** la machine électrique (4) se trouve à l'extérieur de l'espace intermédiaire (5) entre les deux volutes (1.2, 2.2).

4. Installation de pompe-turbine selon l'une des revendications 1 à 3, **caractérisée en ce que** :
4.1 les volutes (1.2, 2.2) sont disposées à une distance définie dans le sens axial l'une de l'autre ;
4.2 les volutes (1.2, 2.2) forment l'une avec l'autre une unité de construction compacte ;
4.3 le tuyau d'évacuation d'une volute débouche dans le tuyau d'arrivée de l'autre volute.
